# FASCICULE DE BREVET EUROPEEN

(11) **EP 0 322 358 B1**
(45) Date de publication et mention de la délivrance du brevet: **13.04.1994**
(21) Numéro de dépôt: 88810849.5
(22) Date de dépôt: 09.12.1988
(51) Int. Cl.: F16L 39/04, F16N 7/34

(54) **Dispositif de distribution de plusieurs fluides dans des conduits multiples**
Versorgungsvorrichtung für mehrere Fluide in Mehrfachleitungen
Distribution device for several fluids in multiple conduits

(30) Priorité: 15.12.1987 CH 4890/87
(43) Date de publication de la demande: 28.06.1989
(73) Titulaire: Devanthéry, Antoine, CH-3966 Chalais/VS (CH)
(72) Inventeur: Devanthéry, Antoine, CH-3966 Chalais/VS (CH)

(56) Documents cités:
- EP-A- 0 103 166
- EP-A- 0 167 063
- BE-A- 493 196
- FR-A- 2 597 954
- GB-A- 920 761

## Description

La présente invention concerne un perfectionnement apporté aux dispositifs permettant de raccorder des collecteurs parcourus par des courants de fluide avec des conduits destinés à guider ces courants.

Le problème du raccordement de conduits destinés à conduire des fluides a déjà été résolu dans certains cas particuliers comme le montrent notamment les publications EP-A-0 103 166 et FR-2 597 954. Toutefois, la première de ces publications concerne l'alimentation d'un appareil de pulvérisation tandis que la seconde se rapporte à un raccord coudé avec réglage du débit de reflux.

Le but de la présente invention est de créer un élément de raccordement, simple, fiable, d'application universelle.

Les problèmes liés à la réalisation d'un distributeur simple, peu encombrant, fiable et efficace ne se recontrent pas uniquement dans le cas où un liquide à pulvériser et un gaz de propulsion doivent être conduits à une buse. La présente invention répond à un besoin général en proposant un dispositif de distribution perfectionné qui peut conduire un ou plusieurs fluides différents dans des conduits multiples formés de tubes coaxiaux. Ce dispositif répond mieux que par le passé aux diverses exigences de la technique, et cela notamment grâce à un agencement des moyens d'étanchéité qui permet l'engagement et le dégagement des conduits d'une manière très simple et rapide, sans faire appel à un outillage quelconque, ce qui permet dans de nombreux cas de relier un même bloc de distributeur à un grand nombre de conduits multiples.

Dans ce but, l'invention a pour objet un dispositif de distribution de plusieurs fluides dans des conduits multiples, formés chacun de plusieurs tubes coaxiaux, comprenant un corps de distributeur avec une pluralité de collecteurs disposés longitudinalement, raccordés à un tube de chaque conduit et conduisant chacun un des fluides, une pluralité de perçages transversaux dont chacun mord sur les différents collecteurs et reçoit un des conduits multiples, et des moyens de liaison et d'étanchéité qui isolent l'espace intérieur de chaque tube par rapport aux espaces intérieurs des autres tubes et aux collecteurs qui leur sont raccordés, chaque conduit multiple comprenant un segment tubulaire central et un ou plusieurs embouts raccordés chacun à un tube de conduit et pourvus d'une ouverture latérale de raccordement à un collecteur, caractérisé en ce que les moyens de liaison et d'étanchéité comprennent, sur chaque embout, des moyens de fixation étanche d'une surface cylindrique interne située à l'extrémité de l'embout sur l'embout intérieur adjacent ou sur le tube central, à un emplacement situé en-deçà de l'ouverture de ce dernier, et une surface cylindrique externe de liaison étanche, pour isoler l'ouverture latérale de l'embout par rapport à son extrémité.

On va décrire ci-après, à titre d'exemple, deux formes de réalisation de l'objet de l'invention, et deux variantes, en se référant au dessin annexé, dont :
la fig. 1 est une vue en élévation partiellement coupée de la première forme d'exécution,
la fig. 2 est une vue en coupe transversale montrant le verrouillage de l'embout
les fig. 2a et 2b sont des vues en plan de dessus, partiellement coupées, de deux variantes de réalisation du verrouillage de l'embout, et
la fig. 3 est une vue en coupe partielle de la seconde forme d'exécution.

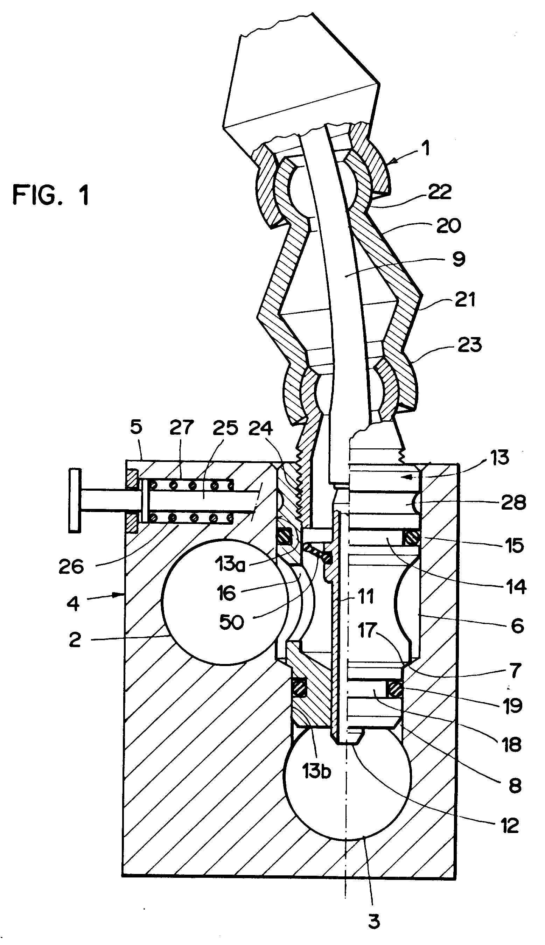

La fig. 1 représente un dispositif de distribution capable de distribuer dans des conduits multiples tels que le conduit 1 plusieurs fluides, c.à.d. dans cette forme d'exécution deux fluides différents. Ces fluides sont conduits dans des collecteurs parallèles 2 et 3 ménagés dans un bloc distributeur 4. Cette pièce est un organe métallique de forme parallélépipèdique qui est percé dans sa longueur de deux passages cylindriques formant les collecteurs 2 et 3 et qui présente, débouchant dans sa face supérieure 5, une série de perçages transversaux, tel que le perçage 6, qui sont des forures cylindriques ayant des diamètres étagés. Ainsi la forure 6 présente dans sa partie supérieure débouchant dans la surface 5 un diamètre tel qu'elle mord sur le collecteur 2. Cette partie supérieure est limitée vers le bas par un siège tronconique 7 d'où part une partie inférieure de la forure 6 qui présente un diamètre réduit et forme un passage terminal qui débouche dans le collecteur 3. Bien que cela ne soit pas représenté, on doit comprendre que le bloc 4 comporte une série de perçages tel que le perçage 6 qui sont alignés, de telle manière à ce que leurs axes coupent tous l'axe du collecteur 3, et à ce que, dans leur partie supérieure, ils mordent sur le collecteur 2, de façon à être en communication avec lui. Chacun des collecteurs 2 et 3 sera relié par des moyens traditionnels à une tubulure d'amenée de l'un des fluides. Dans le cas où le distributeur doit alimenter un pulvérisateur, le collecteur 2 sera parcouru par le liquide à pulvériser, tandis que le collecteur 3 sera parcouru par l'air ou le gaz sous pression destiné à entraîner le liquide dans la buse de pulvérisation.

Cependant, le dispositif décrit peut être destiné à d'autres usages et distribuer d'autres fluides, par exemple de l'acétylène ou de l'hydrogène et de l'oxygène dans le cas d'un brûleur à gaz, ou des fluides qui sont destinés à être mélangés ou séparés en arrivant à leur lieu d'utilisation en créant une solution ou une émulsion dans le cadre d'un mélange ou toute autre combinaison de fluides.

Le perçage 6 reçoit l'extrémité du conduit multiple 1 dont la constitution va être décrite maintenant. Ce conduit comporte un tube central 9 qui peut être constitué par un tube souple de matière plastique par exemple. Ce tube souple 9 est relié à l'entrée du perçage 6 à un segment rigide 11 qui peut être métallique ou de matière plastique, et qui a une forme cylindrique sur toute sa longueur. Ce segment tubulaire central 11 débouche par son extrémité inférieure 12 dans le collecteur 3. Il est maintenu par engagement à force dans un alésage ajusté à son diamètre, ménagé à l'extrémité interne d'un embout 13. Cet embout présente lui-même une forme adaptée au perçage 6. A son extrémité supérieure il comporte une partie cylindrique 13a dont la surface latérale externe est ajustée à friction au diamètre de la partie supérieure du perçage 6, et qui présente en outre une gorge périphérique 14 dans laquelle est engagé un joint d'étanchéité torique 15 qui appuie contre la face interne de la partie supérieure du perçage 6. L'embout 13 présente en outre au-delà de la garniture 14, une ouverture transversale 16 qui traverse l'embout de part en part. Cette ouverture se trouve à la hauteur du collecteur 2, de sorte qu'elle établit la communication entre ce collecteur et l'espace intérieur de l'embout. Au-delà de cette ouverture, l'embout 13 comporte un siège tronconique 17 qui vient s'appuyer sur le siège 7, puis une surface cylindrique 13b qui est ajustée à la partie inférieure du perçage 6 et qui comporte à nouveau une gorge 18 dans laquelle est noyée une garniture torique 19.

L'embout 13 est raccordé au tube extérieur 20 du conduit 1. On note que ce tube extérieur est constitué d'une chaîne d'éléments rigides qui comportent chacun un segment tubulaire 21 de forme bi-tronconique et à chacune des extrémités du segment tubulaire, un élément de rotule 22, 23. Un des éléments de rotule est un élément intérieur, tandis que l'autre est un élément extérieur, de sorte que les éléments du tube extérieur peuvent être articulés les uns aux autres par engagement des éléments de rotule les uns sur les autres, ce qui donne la possiblité de déformer le conduit 1 à volonté et de plus confère à ce conduit la propriété de se maintenir dans la position dans laquelle il a été placé, tout en guidant le tube intérieur souple 9.

On a constaté qu'une construction de ce genre se prétait à la réalisation de conduits multiples même dans le cas où le fluide conduit par les segments 21 se trouve en dépression. Cette aptitude des tubes de ce genre permet de réaliser des conduits multiples qui peuvent être mis en place de cas en cas de façon particulièrement facile. Ainsi, par exemple, cela permet de positionner avec précision une lance de pulvérisation sur une machine-outil.

Le dernier élément du tube 20 est constitué par un segment tubulaire 24 qui présente à son extrémité supérieure un élément de rotule intérieur engagé dans l'élément 23 du segment 21, et se prolonge par une partie filetée engagée dans un taraudage correspondant de l'embout 13.

Grâce au fait que l'étanchéité entre l'embout 13 et les faces internes du perçage 6 est réalisée par des surfaces cylindriques coaxiales, la mise en place et l'enlèvement de l'embout et par conséquent du conduit 1 sont particulièrement aisés.

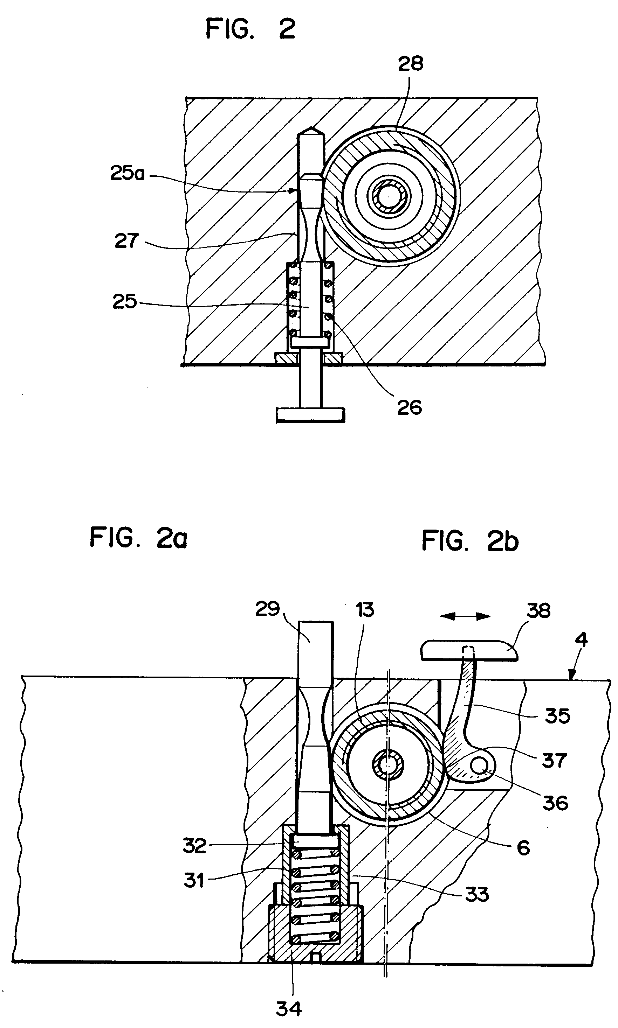

Dans la forme d'exécution décrite, le verrouillage de l'embout 13 dans le perçage 6 est réalisé au moyen d'une tige 25 sollicitée par un ressort 26 et engagée dans un trou transversal 27 du corps 4, de façon qu'une extrémité conique 25a (fig. 2) de la tige 25 pénètre tangentiellement dans une gorge 28 ménagée dans la face latérale externe de l'embout 13 au-dessus de la rainure 14. Ainsi toutes les étanchéités étant réalisées sur des surface cylindriques il suffit de pousser la tige 25 pour pouvoir enlever l'ensemble du conduit multiple.

Toutefois, comme le montre les fig. 2a et 2b, d'autres moyens de verrouillage peuvent également être prévus pour retenir l'embout 13 à l'intérieur du perçage 6 du bloc 4. La fig. 2a montre par exemple un verrou cylindrique 29 muni d'une encoche 30 et qui est repoussé par un ressort 31 dans une position où une partie interne pleine de la tige 29, de forme cylindrique et conique est engagée dans une gorge de l'embout 13. La partie conique du verrou permet d'assurer un blocage de l'embout 13 dans le sens de rotation. La tête 32 du poussoir 29 coulisse dans un cylindre 33 fixé avec son écrou 34 dans une forure du bloc 4. L'extrémité extérieure du poussoir 29 est accessible, de sorte qu'en pressant sur elle, l'encoche 30 est amené cn regard de la périphérie de l'embout 6 et le libère.

A la fig. 2b on a représenté un autre dispositif de verrouillage constitué par un levier 35 pivotant en 36 dans une fente horizontale du distributeur 4, et présentant un coude 37 qui s'engage en position de verrouillage dans la gorge 28. Le levier 35 peut être manoeuvré à partir de son extrémité extérieure qui fait saillie d'une encoche 38 ménagée dans la face supérieure du bloc 4.

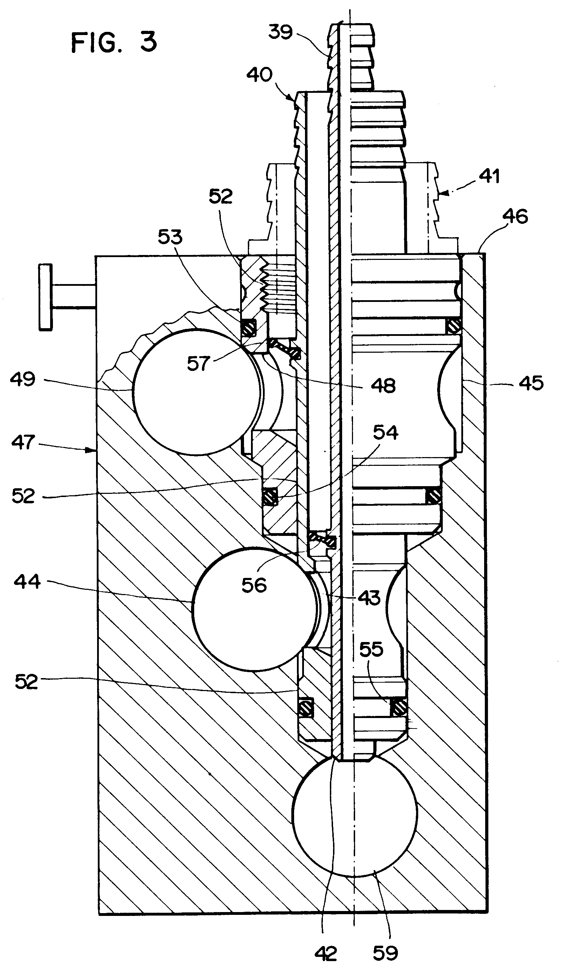

A la fig. 3 on a représenté un exemple d'un dispositif de distribution dont chaque conduit multiple comporte trois tubes coaxiaux. Ces tubes ne sont pas représentés au dessin qui montre simplement un segment tubulaire rigide terminal 39 relié au tube central, et deux embouts 40 et 41 coaxiaux au segment tubulaire 39 et qui seront reliés chacun à un des tubes du conduit multiple.

Dans cette forme d'exécution, le segment tubulaire rigide 39 et fixé un peu en deçà de son extrémité inférieure 42 soit par chassage, soit par soudage ou brasage ou collage, à l'extrémité inférieure de l'embout 40, lequel présente en deçà de la zone de fixation, une ouverture transversale 43 destinée à établir une communication entre l'espace intérieur de l'embout 40 et un collecteur 44 dans lequel mord le perçage 45 ménagé dans la face supérieure 46 du bloc de distributeur 47. En deçà de l'ouverture 43, l'embout 40 présente une portion de surface cylindrique externe sur laquelle s'engage et se fixe de manière étanche l'extrémité inférieure de l'embout 41 qui présente lui-même en deçà de cette zone de fixation une ouverture latérale 48 mettant en communication l'espace intérieur de l'embout 41 avec un collecteur 49 également ménagé longitudinalement dans le bloc 47 au-dessus du collecteur 44. Chacun des embouts 40 et 41, de même que le segment tubulaire 39, seront reliés par des moyens appropriés, par exemple engagement sur des nervures circulaires d'un raccord cannelé à l'un des tubes du conduit multiple.

Le perçage 45 présente une série de surfaces internes cylindriques, étagées, de diamètre décroissant depuis le haut. Ces portions de surface désignées par 52 guident des portions de surface correspondantes des embouts 41 et 40. Les deux surfaces 52 supérieures guident des portions de surface correspondantes de l'embout 41 présentant des gorges dans lesquelles sont ménagés des joints toriques 53 et 54. Quant à la troisième surface 52 située a l'extrémité inférieure du perçage, elle guide une portion de surface cylindrique externe située à la base de l'embout 40, et qui présente une gorge dans laquelle est logée une garniture d'étanchéité 55. Ainsi, dans cette exécution de nouveau, toutes les étanchéités sont réalisées par des surfaces cylindriques coaxiales. De plus, les embouts et le segment tubulaire central sont rigidement fixés les uns aux autres et rendus étanches les uns par rapport aux autres, alors que les étanchéités entre les embouts et le perçage 45 sont réalisées par des joints toriques susceptibles d'être enlevés lorsque l'on retire le conduit multiple.

Dans la forme d'exécution de la fig. 3, le blocage de l'extrémité du conduit multiple par rapport au bloc 47 sera réalisé par l'un des moyens décrits en relation avec les fig. 2, 2a et 2b. Les deux embouts 40 et 41 de même que le tube rigide 39 pourront être reliés aux tubes souples correspondants par des moyens divers, par exemple, à l'instar de ce qui est représenté aux fig. 1 et 3 par un raccord cannelé à une extrémité et pourvu d'un filetage gaz à l'autre extrémité ou, comme on le voit pour les éléments 39 et 40 à la fig. 3, par engagement du conduit souple sur des cannelures du tube ou de l'embout.

Enfin, il y a lieu de mentionner une autre particularité du dispositif, applicable aussi bien avec une forme d'exécution comme celle de la fig. 1 qu'avec une exécution à plus de deux conduits coaxiaux, comme celle de la fig. 3. Dans le cas d'une utilisation du distributeur pour l'alimentation d'un pulvérisateur où un fluide circulant dans un conduit annulaire autour du tube central est en dépression, il faut éviter que lors des arrêts, ce fluide ne puisse s'égoutter hors de la buse. Pour cela, il est avantageux de disposer, entre le collecteur et la buse, à un emplacement convenable, une membrane annulaire qui fonctionne en clapet anti-retour. Des membranes de ce genre désignées respectivement par 50, 56, 57 sont représentées aux fig. 1 et 3. La membrane 50 est fixée par son bord interne dans une gorge du tube central 11, qui sera décolleté avec une nervure extérieure. La membrane 50 a une forme conique et s'appuie par son bord extérieur, dirigé vers le haut contre la face intérieure de l'embout 13, au-dessus, donc en deça de l'ouverture latérale 16. De même, dans la deuxième forme d'exécution, le tube central 39 et l'embout 40 sont équipés de membranes 56, 57. La membrane 56 s'appuie contre la face interne de l'embout 40 au-dessus de l'ouverture 43 et la membrane 57 s'appuie contre la face interne de l'embout 41 au-dessus de l'ouverture 48. Ces membranes sont conçues de manière à ce qu'elles s'ouvrent en présence d'une dépression en aval ou d'une surpression en amont. Le fluide ne peut s'écouler que dans un sens. Toutefois, cette ou ces membranes pourraient aussi, le cas échéant, se trouver à un autre emplacement dans le conduit multiple. En particulier, la buse du pulvérisateur pourrait contenir une telle membrane. De plus, on a constaté qu'en plaçant une ou des membranes comme décrit ci-dessus au niveau du raccord du distributeur, non seulement on évitait le gouttage du liquide hors de la buse dans la fonction d'alimentation d'un pulvérisateur, mais que de manière générale la présence de telles membranes à cet endroit avait pour effet d'éviter le recul des liquides dans les conduits multiples en cas d'arrêt de l'écoulement.

Le dispositif décrit, notamment celui qui est représenté aux fig. 1 et 2 permet de réaliser des systèmes de distribution de fluides facilement adaptables et peu encombrants, sur des machines-outils. Un bloc distributeur comportant un ou plusieurs perçages et un ou plusieurs conduits à rotule raccordés à ces perçages peut être monté à un endroit adéquat sur la machine. Il sera alimenté par un seul conduit multiple formé de deux tuyaux souples coaxiaux, raccordés à un autre perçage transversal du bloc. En d'autres termes, le distributeur permet aussi aux fluides de s'écouler d'un conduit multiple vers les collecteurs. Dans ce cas, ce conduit multiple d'alimentation ne comportera pas de membrane.

## Revendications

1. Dispositif de distribution de plusieurs fluides dans des conduits multiples, formés chacun de plusieurs tubes coaxiaux, comprenant un corps de distributeur avec une pluralité de collecteurs disposés longitudinalement, raccordés à un tube de chaque conduit et conduisant chacun un des fluides, une pluralité de perçages transversaux dont chacun mord sur les différents collecteurs et reçoit un des conduits multiples, et des moyens de liaison et d'étanchéité qui isolent l'espace intérieur de chaque tube par rapport aux espaces intérieurs des autres tubes et aux collecteurs qui leur sont raccordés, chaque conduit multiple comprenant un segment tubulaire central (11;39) et un ou plusieurs embouts (13;40,41) raccordés chacun à un tube de conduit (9,20) et pourvus d'une ouverture latérale (16;48,43) de raccordement à un collecteur (2;49,44), caractérisé en ce que les moyens de liaison et d'étanchéité comprennent, sur chaque embout, des moyens de fixation étanche d'une surface cylindrique interne située à l'extrémité de l'embout sur l'embout intérieur adjacent ou sur le tube central, à un emplacement situé en-deçà de l'ouverture de ce dernier, et une surface cylindrique externe de liaison étanche, pour isoler l'ouverture latérale de l'embout par rapport à son extrémité.

2. Dispositif selon la revendication 1, caractérisé en ce que l'embout extérieur comporte en outre une surface cylindrique externe de liaison étanche située en-deçà de son ouverture latérale et coopérant avec une portion de surface cylindrique interne du perçage.

3. Dispositif selon la revendication 1, caractérisé en ce que les dites surfaces cylindriques externes de liaison étanche sont munies de garnitures de joint (19;54,55) et sont agencées pour s'insérer à friction dans des surfaces cylindriques internes ménagées sur le perçage.

4. Dispositif selon la revendication 1, caractérisé en ce que l'embout externe (13;41) de chaque conduit et l'entrée de chaque perçage sont munis de moyens de fixation complémentaires (25,28) assurant le positionnement de chaque conduit dans son perçage dans le sens axial.

5. Dispositif selon l'une des revendications 1-4, dans lequel les tubes d'au moins un des conduits sont des tubes déformables, caractérisé en ce que l'un de ces tubes déformables (20) est constitué par une chaîne de segments tubulaires rigides (21) munis d'éléments de rotule (23) à leurs deux extrémités, et articulés les uns aux autres, les articulation étant étanches.

6. Dispositif selon l'une quelconque des revendications 1 à 5, pour distribuer des fluides à des pulvérisateurs, caractérisé en ce que dans au moins un des conduits multiples, l'embout ou le segment tubulaire central d'au moins un des tubes (9) est équipé d'une membrane annulaire souple (50) dont un bord est solidaire de l'embout ou du segment tubulaire central (11) et l'autre bord appuie élastiquement contre la paroi (13a) de l'embout d'un tube adjacent de manière à constituer un clapet anti-retour.

7. Dispositif selon la revendication 6, caractérisé en ce que la ou les membranes (50;56) sont solidarisées par leur bord interne sur un embout ou sur le segment tubulaire central du conduit multiple et sont situées de manière à bloquer la communication entre l'espace tubulaire qui entoure le tube central ou un embout et l'ouverture latérale de l'embout qui entoure la membrane.

8. Dispositif selon la revendication 6, caractérisé en ce qu'au moins une membrane est logée dans une buse située à l'extrémité du conduit multiple.

9. Dispositif selon la revendication 4, caractérisé en ce que les dits moyens de fixation complémentaires sont susceptibles d'être actionnés pour libérer le conduit multiple.

## Claims

1. Distribution device for several fluids in multiple conduits, each formed of a plurality of coaxial tubes, comprising a distributor body with a plurality of collectors disposed longitudinally connected to a tube of each conduit and each conducting one of the fluids, a plurality of transversal perforations each of which goes over into the different collectors and receives one of the multiple conduits, and connecting means and tightness means which insulate the interior space of each tube with respect to the interior space of the other tubes and to the collectors which are connected thereto, each multiple conduit comprising a central tubular segment (11; 39) and one or a plurality of joining pieces (13; 40, 41) each connected to a tube of the conduit (9, 20) and provided with a lateral connecting aperture (16; 48, 43) to a collector (2; 49, 44), characterized in that the connecting means and the tightness means comprise, on each joining piece, impervious fastening means with an internal cylindrical surface situated at the end of the joining piece on the adjacent interior joining piece or on the central tube, at a location situated on the side of the opening of the latter, and an external cylindrical surface for tight connection for insulating the lateral opening of the joining piece with respect to its end.

2. Device according to claim 2 characterized in that the external joining piece includes another external cylindrical surface for tight connection situated on the side of its laterial opening and cooperating with a portion of the internal cylindrical surface of the perforation.

3. Device according to claim 1, characterized in that the said external cylindrical surfaces for tight connection are equipped with joint fittings (19; 54, 55) and are disposed for frictional insertion in the internal cylindrical surfaces provided on the perforation.

4. Device according to claim 1, characterized in that the external joining piece (13; 41) of each conduit and the entrance of each perforation are equipped with complementary fastening means (25, 28) assuring the positioning of each conduit in its perforation in the axial direction.

5. Device according to one of the claims 1 to 4, in which the tubes of at least one of the conduits are ductile, characterized in that one of these ductile tubes (20) is comprised of a chain of rigid tubular segments equipped with pivot elements (23) at their two ends, and articulated with each other, the articulation being impervious.

6. Device according to one of the claims 1 to 5, for distributing fluids to atomizers characterized in that in at least one of the multiple conduits, the joining piece or the central tubular segment of at least one of the tubes (9) is equipped with a pliable, annular membrane whose one edge is integral with the joining piece or the central tubular segment (11) and the other edge rests elastically against the wall (13a) of the joining piece of an adjacent tube in a manner to constitute a non-return valve.

7. Device according to claim 6, characterized in that the membrane or membranes (50; 56) cooperate by their inner edge on a joining piece or on a central tubular segment of the multiple conduit, and are positioned so as to block communication between the tubular space which surrounds the central tube or a joining piece and the lateral opening of the joining piece which surrounds the membrane.

8. Device according to claim 6, characterized in that at least one membrane is fitted in a nozzle situated at the end of the multiple conduit.

9. Device according to claim 4 characterized in that the said complementary fastening means can be operated for detaching the multiple conduit.

## Patentansprüche

1. Einrichtung zur Verteilung von mehreren Fluiden in Mehrfachleitungen, wovon jede aus mehreren koaxialen Rohren gebildet ist, bestehend aus einem Verteilkörper mit einer Mehrzahl von Sammelleitungen, welche längs angeordnet sind, die mit einem Rohr jeder Leitung verbunden sind und jede eines der Fluide führen, der eine Mehrzahl von transversalen Bohrungen umfasst, wovon jede in eine unterschiedliche Sammelleitung eingreift und eine der Mehrfachleitungen aufnimmt, und Verbindungs- und Dichtmittel aufweist, welche den inneren Raum jedes Rohres bezüglich den inneren Räumen der anderen Rohre und den Sammelleitungen, die mit ihnen verbunden sind, abtrennen, wobei jede Mehrfachleitung ein zentrales Rohrsegment (11; 39) und einen oder mehrere Ansätze (13; 40, 41) aufweist, welche jeder mit einer Führungsleitung (9, 20) verbunden und mit einer seitlichen Oeffnung (16; 48, 43) zur Verbindung mit einer Sammelleitung (2; 49, 44) versehen ist, dadurch gekennzeichnet, dass die Verbindungs- und Dichtmittel auf jedem Ansatz dichtende Befestigungsmittel mit innerer zylindrischer Oberfläche aufweisen, angeordnet am Ende des Ansatzes, auf dem benachbarten inneren Ansatz oder auf dem zentralen Rohr an einem Ort diesseits der Oeffnung dieses letzteren, und eine äussere zylindrische Oberfläche zur Dichtverbindung aufweisen, um die seitliche Oeffnung des Ansatzes bezüglich seines Endes zu isolieren.

2. Einrichtung nach Anspruch 1, dadurch gekennzeichnet, dass der äussere Ansatz unter anderem eine äussere zylindrische Oberfläche zur dichtenden Verbindung aufweist, die diesseits seiner seitlichen Oeffnung angeordnet ist und mit einem Teil der inneren zylindrischen Oberfläche der Bohrung zusammenwirkt.

3. Einrichtung nach Anspruch 1, dadurch gekennzeichnet, dass die genannten äusseren zylindrischen Oberflächen zur dichtenden Verbindung mit Dichtungen (19; 54, 55) versehen sind und mit Reibung in die inneren zylindrischen Oberflächen, angeordnet auf der Bohrung, eingesetzt sind.

4. Einrichtung nach Anspruch 1, dadurch gekennzeichnet, dass der äussere Ansatz (13; 41) jeder Leitung und der Eintritt jeder Bohrung mit Mitteln (25, 28) zur zusätzlichen Halterung versehen sind, wodurch die Positionierung jeder Leitung in der Bohrung in axialer Richtung gewährleistet ist.

5. Einrichtung nach einem der Ansprüche 1 bis 4, in welcher die Rohre von mindestens einer Leitung deformierbar sind, dadurch gekennzeichnet, dass eines dieser deformierbaren Rohre (20) aus einer Kette von rohrförmigen, steifen Segmenten (21) besteht, versehen mit Kugelgelenkelementen (23) an deren beiden Enden, die miteinander gelenkig verbunden sind und die gelenkige Verbindung abgedichtet ist.

6. Einrichtung nach einem der Ansprüche 1 bis 5, zur Verteilung der Fluide in Flüssigkeitszerstäubern, dadurch gekennzeichnet, dass in mindestens einer der Mehrfachleitungen der zentrale Ansatz oder das zentrale rohrförmige Segment mindestens eines Rohres (9) mit einer ringförmigen biegsamen Membrane (50) ausgerüstet ist, deren eine Rand einstückig mit dem Ansatz oder dem zentralen rohrförmigen Segment (11) ist, und der andere Rand elastisch gegen die Wand (13a) des Ansatzes eines benachbarten Rohres abgestützt ist, sodass eine Rückschlagklappe gebildet wird.

7. Einrichtung nach Anspruch 6, dadurch gekennzeichnet, dass die Membrane oder die Membranen (50; 56) durch ihren inneren Rand mit einem Ansatz oder dem zentralen rohrförmigen Segment der Mehrfachleitung verbunden sind, und so angeordnet sind, dass die Verbindung zwischen dem rohrförmigen Raum, welcher das zentrale Rohr oder einen Ansatz umgibt, und der seitlichen Oeffnung des Ansatzes, welcher die Membrane umgibt, blockierbar sind.

8. Einrichtung nach Anspruch 6, dadurch gekennzeichnet, dass mindestens eine Membrane in einer Düse, die am Ende der Mehrfachleitung angeordnet ist, eingesetzt ist.

9. Einrichtung nach Anspruch 4, dadurch gekennzeichnet, dass die genannten Mittel zur zusätzlichen Halterung geeignet sind, zur Freigebung der Mehrfachleitung betrieben werden zu können.
